Europäisches Patentamt

European Patent Office

Office européen des brevets

(11) Publication number: 0 330 213
A2

## (12) EUROPEAN PATENT APPLICATION

(21) Application number: 89103219.5

(22) Date of filing: 23.02.89

(51) Int. Cl.⁴: G06F 12/12

(30) Priority: 25.02.88 JP 40687/88

(43) Date of publication of application:
30.08.89 Bulletin 89/35

(84) Designated Contracting States:
DE FR GB

(71) Applicant: KABUSHIKI KAISHA TOSHIBA
72, Horikawa-cho Saiwai-ku
Kawasaki-shi Kanagawa-ken 210(JP)

(72) Inventor: Sasai, Kiyotaka
2-14-16, Shinkyasu Kanagawa-ku
Yokohama-shi Kanagawa-ken(JP)
Inventor: Sasaki, Tohru
1-20, Shimeicho Saiwai-ku
Kawasaki-shi Kanagawa-ken(JP)

(74) Representative: Lehn, Werner, Dipl.-Ing. et al
Hoffmann, Eitle & Partner Patentanwälte
Arabellastrasse 4
D-8000 München 81(DE)

### (54) LRU circuit for cache memory.

(57) An LRU circuit comprises memory cells each having a control line enabling reading and writing operations, and two data lines used for these operations. The memory cells are set in one of two statuses depending on a potential difference between the data lines, or held as they are if the potential difference does not exist. The memory cells are arranged in an array (14). The number of columns (row) of the array (14) corresponds to the number of memory cells necessary to store binary LRU data required to execute an LRU algorithm on elements of each set, while the number of rows (columns) of the array corresponds to the number of sets. Memory cells in each row of the array (14) are put in a read-write enabled state upon receiving a signal from one of the sets corresponding to the row in question of the array. The data lines of the memory cells in the same column are connected to each other in the direction of the column. The LRU circuit further comprises an input control circuit (15) for receiving a hit signal indicating a used element of a certain set to update, according to the LRU algorithm, values in memory cells of the array (14) through the column data lines, and an output control circuit (16) for decoding values in the memory cells of a specified row of the array to determine an LRU element.

FIG.7

## LRU CIRCUIT FOR CACHE MEMORY

### BACKGROUND OF THE INVENTION

#### Field of the Invention

The present invention relates to an LRU (Least Recently Used) circuit adopted for a cache memory, etc., which is arranged between a CPU and a main storage to improve the memory accessing speed of a computer system.

#### Description of the Prior Art

In the computer system, a speed to access the main storage is relatively slow compared to a cycle time of the CPU, thus causing a waiting time. To cope with this problem and improve a processing speed, the cache memory which is a high-speed buffer memory is arranged between the CPU and the main storage.

The cache memory stores the contents of the main storage which have higher possibility to be accessed. Generally, the contents of an accessed address and the contents of nearby addresses of the accessed address are copied from the main storage to the cache memory. Therefore, most of the contents of the main storage can be obtained by accessing the cache memory instead of actually accessing the main storage.

If a certain address of the main storage is accessed and if the contents of the address are not in the cache memory (a cache miss), part of the contents of the cache memory is replaced with new data located at the accessed address of the main storage. To decide which part of the cache memory shall be replaced, there are several known techniques. One of the techniques is an LRU method in which the contents which have not been accessed for the longest time period are replaced with the new data.

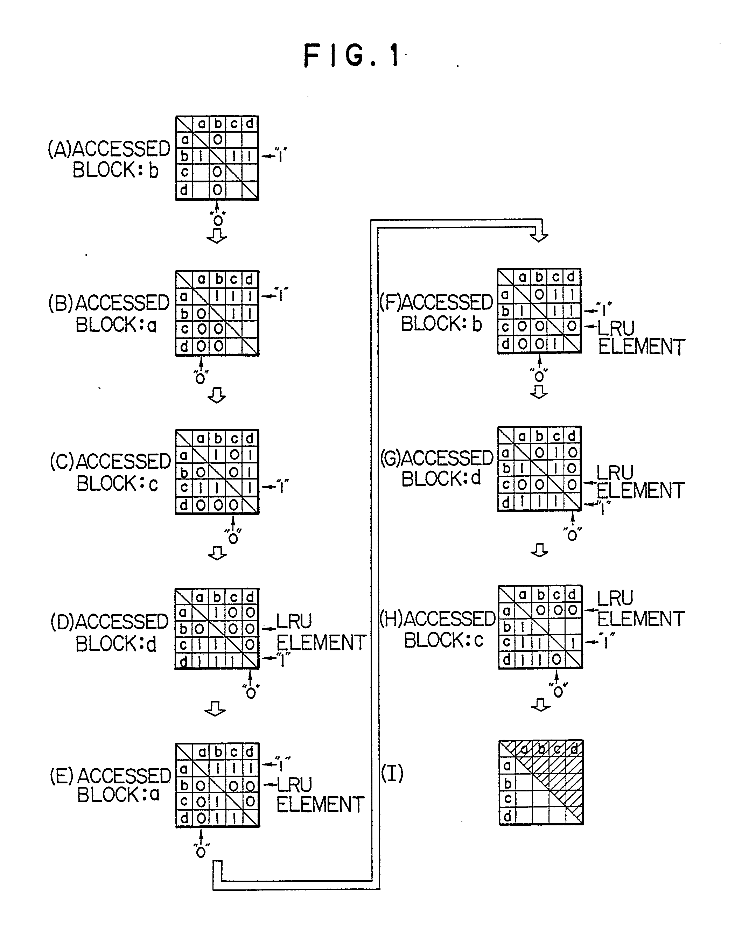

For example, if a cache miss occurs, the contents of one of blocks a, b, c and d of the cache memory which is determined according to the LRU method are replaced with new data. According to the LRU method, a control table such as the one shown in Fig. 1 is used. The control table includes rows a, b, c and d, and columns a, b, c and d. Whenever any one block of the cache memory is accessed, values in the control table at intersections between a row corresponding to the accessed block and columns for the other blocks are set to 1, while values in the control table at intersections between a column corresponding to the accessed block and rows for the other blocks are set to 0.

According to this algorithm, a block represented with a row of all zeros in the control table is selected as an LRU block. If the cache miss occurs, the contents of the current LRU block are replaced with new data.

Fig. 1(A) to 1(H) show which block is selected as the LRU block after respective accesses.

As shown in Fig. 1(I), values in the control table are symmetrical in relation to a diagonal line connecting intersections of respective rows and columns of the same blocks. Therefore, one half of the control table is sufficient.

To execute the above-mentioned LRU algorithm, an LRU circuit is used.

Figs. 2 to 6 show an example of conventional LRU circuits which is a four-way-set-associative type LRU circuit adopted for a cache memory.

Figs. 5 and 7 show a cache memory which comprises an address array 1 for storing addresses of a main storage, and a data array 2 for storing the contents of the addresses. The addresses and contents of the main storage are stored in corresponding blocks of the two arrays 1 and 2, respectively. Each of the blocks of the cache memory has one word capacity.

When an actual address of the main storage is given to the cache memory, a lower address of the given address is decoded in a decoder 3 to select a row which is called a "set" of the address array 1 as well as selecting a row (set) of the data array 2.

A comparison circuit 4 compares in parallel an upper address of the given address with addresses stored in four blocks which are called "elements" of the selected set of the address array 1. If an address stored in any one of the elements coincides with the upper address, a selector 5 selects the contents of an element of the data array 2 corresponding to the element of the address array 1 storing the upper address, and reads out the contents of the selected element.

If none of the addresses stored in the elements of the address array 1 coincides with the upper address, the main storage is accessed. Then, the contents of an LRU element in the selected set of the address array 1 and the contents of an LRU element in the selected set of the data array 2 are replaced with the accessed address and contents of the main storage.

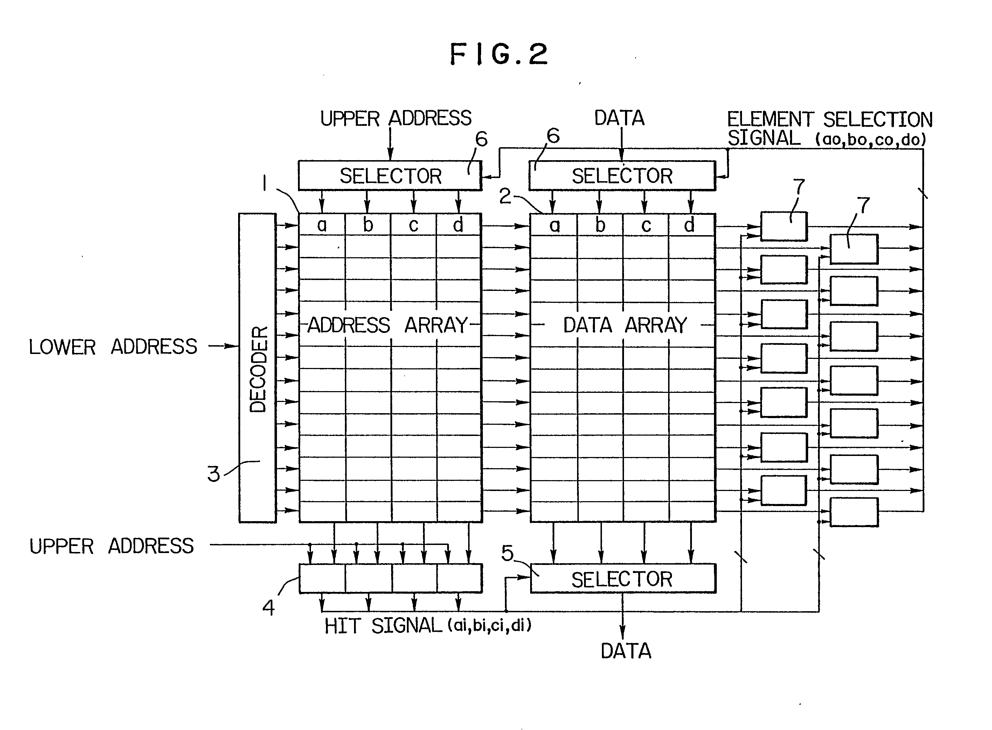

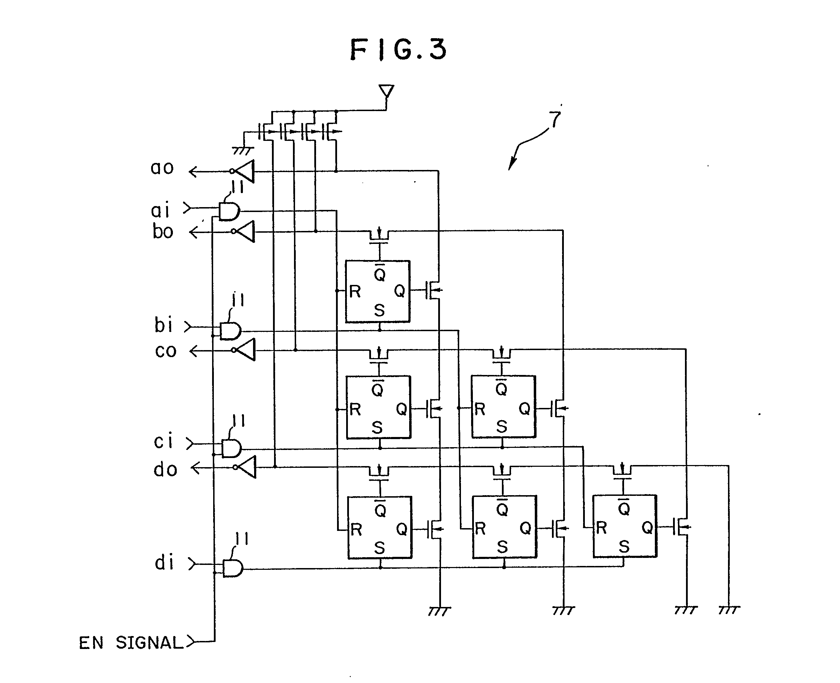

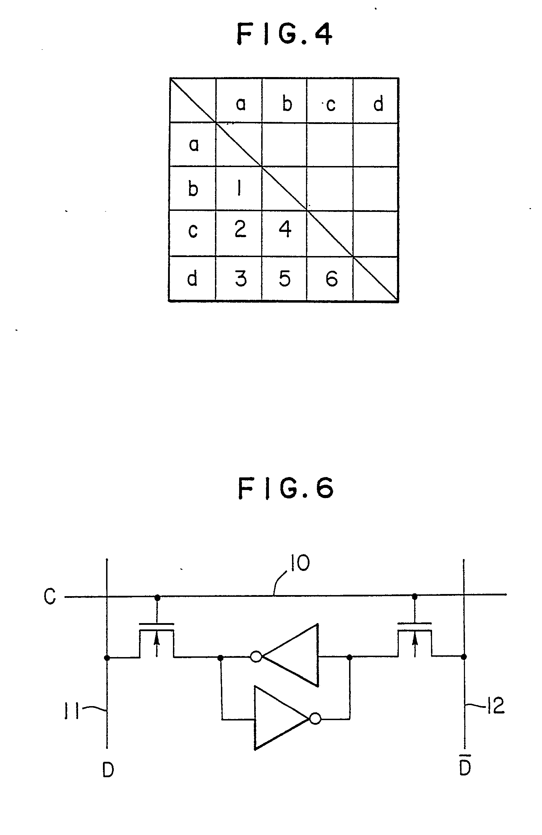

The LRU circuit 17 shown in Fig. 2 is constituted as shown in Fig. 3. Each LRU circuit is provided for each of the sets of the cache memory. The LRU circuit 17 comprises six R-S flip-flop circuits F/F 1 to 6. Output levels of the F/F 1 to 6 correspond to values at intersections 1 to 6 between rows "a" to "d" and columns "a" to "d" of the one half of a control table shown in Fig. 4.

If the cache memory is hit, an accessed set of the cache memory transmits an enable signal EN to enable the LRU circuit 17 related to the accessed set. Further, a hit signal (ai, bi, ci or di) indicating an accessed one of elements of the accessed set is generated to set or reset the F/F circuits related to the rows and columns of the control table corresponding to the accessed element according to the algorithm of the LRU circuit. Then, an element specified with any one having a value of "1" among outputs "ao" to "do" is selected as an LRU element out of the element of the accessed set.

If a cache miss occurs, selectors 6 select LRU elements among elements "a" to "d" of selected sets of both the address and data arrays according to the output signals "ao" to "do" from the LRU circuit 17, and the contents of the selected LRU elements are replaced with new data.

This sort of LRU circuit can update LRU information at a speed equivalent to a cache memory accessing speed without using extra clock cycles. This circuit, however, uses many elements to complicate wiring and hinder dense integration of the circuit.

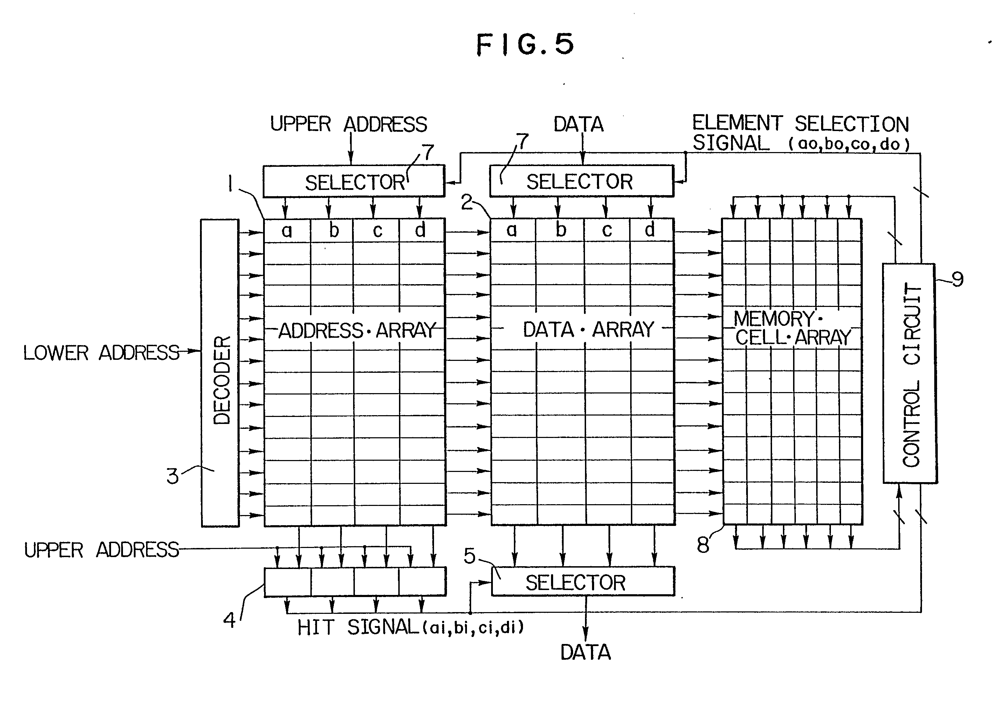

Fig. 5 shows another LRU circuit which comprises a memory cell array 8 and a control circuit 9. In the memory cell array 8, the number of rows corresponds to the number of sets of a cache memory, and each of the rows includes six memory cells necessary for storing LRU information related to four elements included in each of the sets of the cache memory.

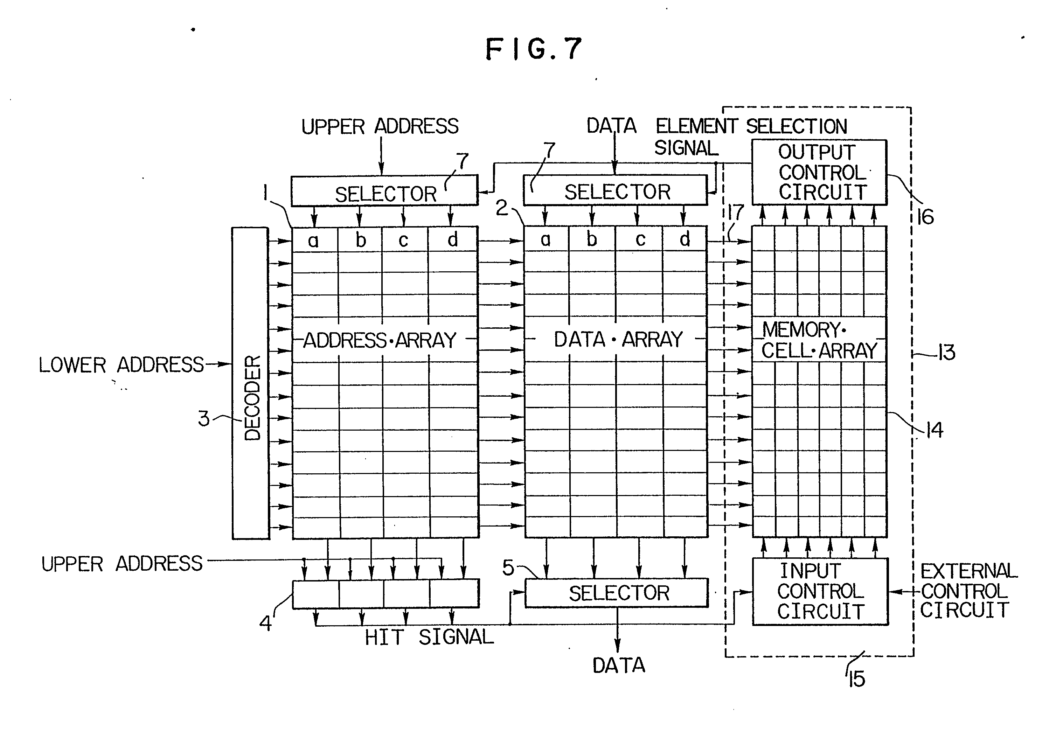

Fig. 6 shows the constitution of each memory cell of the LRU circuit of Fig. 5. When a control line 10 is HIGH, the memory cell can be read or written through data lines 11 and 12.

If one of the sets in the cache memory is selected by a memory access operation, the control line 10 of a row of cells of the memory cell array 8 corresponding to the selected set of the cache memory is put in HIGH so that the LRU information may be read out of six cells contained in the above-mentioned row of the memory cell array 8. The read LRU information is inputted into the control circuit 9.

When the cache memory is hit, the LRU information and a hit signal indicating an accessed element are inputted into the control circuit 9 to update the LRU information according to an LRU algorithm and rewrite it in the original six memory cells.

If a cache miss occurs, the control circuit 9 does not receive the hit signal so that the LRU information is not updated but rewritten as it is. Meanwhile, the control circuit 9 outputs an element selection signal (ao, bo, co or do) to selectors 7 to replace the contents of current LRU elements contained in accessed sets of the address and data arrays with new data.

This sort of LRU circuit can use the same memory cells as those used in a static RAM so that the memory cell array 8 may be integrated densely. This circuit, however, needs reading and writing operations in updating the LRU information to consume two memory cycles. Therefore, with this sort of LRU circuit, it is impossible to successively access the cache memory and a TLB (Translation Lookaside Buffer) each in one cycle so that a total operation speed may slow down.

## SUMMARY OF THE INVENTION

An object of the present invention is to provide an LRU circuit which can update values in memory cells with no reading operation to realize a high-speed operation.

In order to accomplish the object, the present invention provides an LRU circuit which comprises memory cells. Each of the memory cells has a control line enabling reading and writing operations, and two data lines used for the reading and writing operations. The memory cells are set in one of two statuses depending on the direction of a potential difference between the data lines, or held as they are if there is no potential difference between the data lines.

The memory cells are arranged in a memory cell array. The number of columns (rows) of the memory cell array corresponds to the number of memory cells necessary to store binary LRU data required to execute an LRU algorithm on elements of each set, and the number of rows (columns) of the memory cell array corresponds to the number of sets.

Memory cells in each row of the array are put in a reading and writing enabled state upon receiving a signal from one of the sets corresponding to the row in question of the array. The data lines of the memory cells in the same column are connected to each other in the direction of the column.

The LRU circuit of the present invention further comprises an input control circuit which receives a hit signal indicating a used one of elements of a certain set and updates, according to the LRU algorithm, values in corresponding memory cells of the array through the column data lines, and an output control circuit for decoding values in the memory cells of specified one of the rows of the array to determine an LRU element.

With the above-mentioned arrangement, the LRU circuit of the present invention can update values in memory cells with no reading operation, thus realizing a high-speed operation. Further, the LRU circuit as a whole can be integrated densely.

## BRIEF DESCRIPTION OF THE DRAWINGS

Figs. 1(A) to 1(H) are explanatory views showing a control table in which an LRU element changes according to an LRU algorithm;

Fig. 1(I) is an explanatory view showing symmetry of the control table;

Fig. 2 is a view showing an LRU circuit of a prior art adopted for a four-way-set-associative type cache memory;

Fig. 3 is a view showing the constitution of the LRU circuit of Fig. 2;

Fig. 4 is a view showing relations of respective F·F circuits in the LRU circuit of Fig. 3 and binary LRU data of a control table;

Fig. 5 is a view showing an LRU circuit of another prior art adopted for the four-way-set-associative type cache memory;

Fig. 6 is a circuit diagram showing one of memory cells constituting a memory cell array of Fig. 5;

Fig. 7 is an LRU circuit according to an embodiment of the present invention adopted for the four-way-set-associative type cache memory;

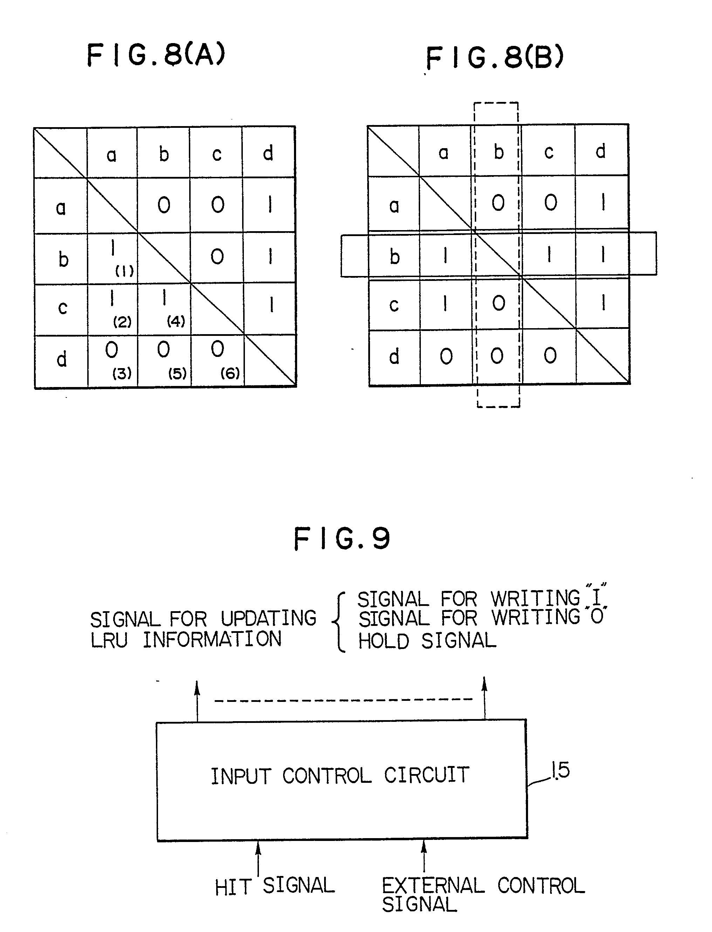

Fig. 8(A) is a view showing relations of memory cells in each row and binary LRU data in a control table;

Fig. 8(B) is a view showing the updating of LRU data when an element "b" is accessed;

Fig. 9 is a view showing inputs and outputs of an input control circuit of the LRU circuit of the embodiment;

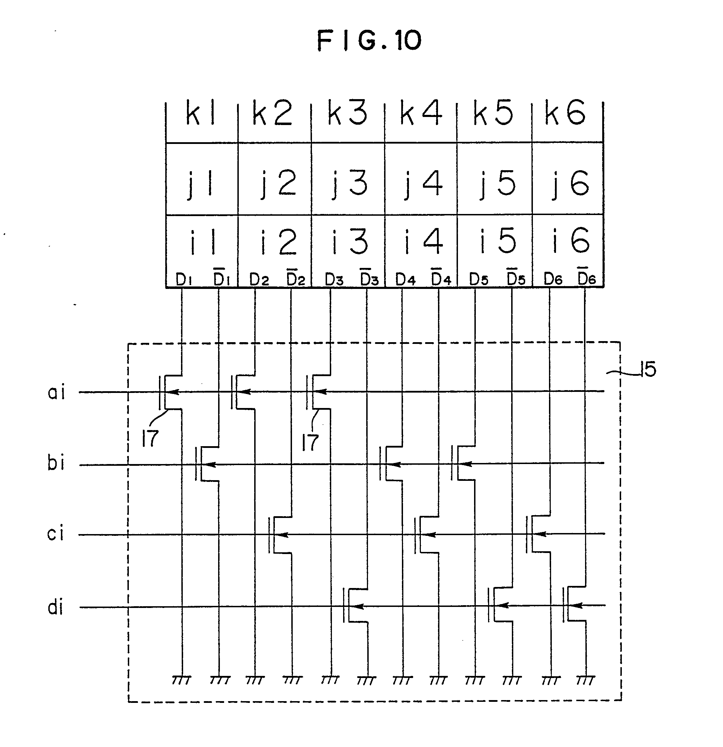

Fig. 10 is a view showing the details of the input control circuit of the LRU circuit of the embodiment;

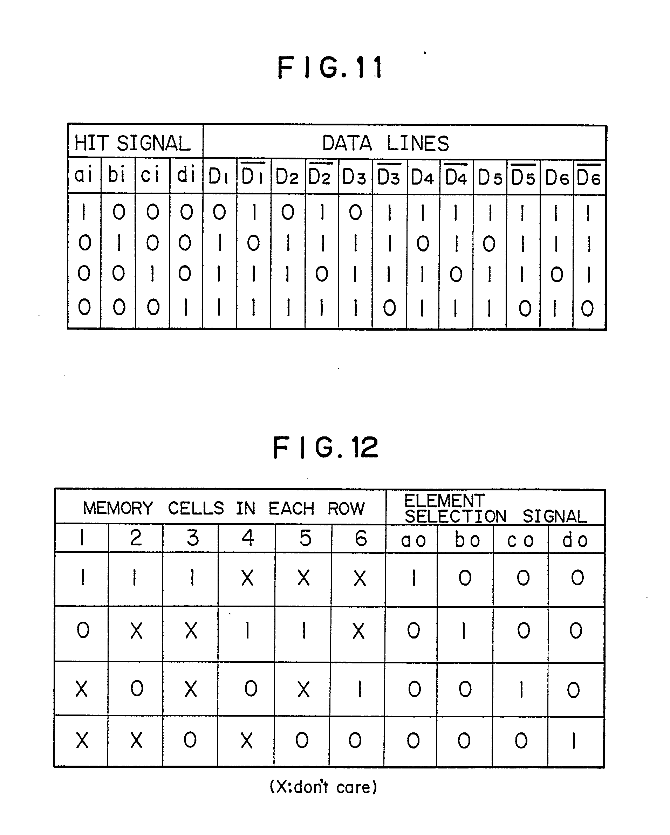

Fig. 11 is a view showing relations of hit signals and the potentials of data lines of columns of a memory cell array; and

Fig. 12 is a view showing relations of values in memory cells of columns of the memory cell array and element selection signals to be outputted from an output control circuit of the embodiment.

## DETAILED DESCRIPTION OF THE PREFERRED EMBODIMENTS

Fig. 7 is a view showing an LRU circuit according to an embodiment if the present invention. In this embodiment, the LRU circuit is used for a four-way-set-associative type cache memory which is similar to those shown in Figs. 2 and 5.

The LRU circuit 13 comprises a memory cell array 14, an input control circuit 15 and an output control circuit 16.

Similar to the LRU circuit shown in Fig. 5, the memory cell array 14 has rows whose number is the same as the number of sets contained in the cache memory, and each row includes six memory cells. According to this embodiment, values in six memory cells of each row correspond, from the left to the right, to values (1) to (6) in a control table shown in Fig. 8. Each of the memory cells has the same circuit constitution as that shown in Fig. 6.

As shown in Fig. 7, the input control circuit 15, when receiving a hit signal (ai, bi, ci or di) from a comparison circuit 4, updates LRU information stored in memory cells of a row whose control line is at HIGH due to an enable signal 171 transmitted from an accessed one of the sets in the cache memory.

Instead of the hit signal, an external control signal may be provided to update or reset the LRU information.

As shown in Fig. 9, the input control circuit 15 outputs write signals to write 1 or 0 in the cells, and hold signals to hold values in the cells as they are.

For example, if the memory cells of a certain row of the array 14 have values as shown in an LRU control table of Fig. 8(A) and if an element "b" in one corresponding set in the cache memory is accessed, the input control circuit 15 provided write signals to write "1" in portions encircled with a continuous line shown in Fig. 8(B). These portions correspond to a leftmost memory cell of the above-mentioned certain row of the array 14. At the same time, the input control circuit 15 provides write signals to write "0" in portions encircled with a dotted line shown in the same figure. These portions correspond to the fourth and fifth memory cells from the left of the above-mentioned certain row of the array 14. To the other memory cells of the certain row, the input control circuit 15 provides hold signals.

Instead of the hold signals, write masking signals, etc., may be provided to prevent values in the memory cells from changing.

Fig. 10 shows an example of the constitution of the input control circuit 15. As shown in the figure, the cells in respective columns of the memory cell array 14 have data lines D and $\overline{D}$ which are connected to column data lines DI, $\overline{D1}$ to D6, $\overline{D6}$. The column data lines are grounded through NMOS elements 17. Gates of the NMOS elements 17 which are connected to the column data lines D1 to D6 are connected with hit signals that correspond to the columns of the LRU control table, while gates of the NMOS elements 17 which are connected to the column data lines $\overline{D1}$ to $\overline{D6}$ are connected with hit signals that correspond to the rows of the LRU control table.

With such an arrangement, if the control line C is HIGH, it is supposed to be "1" with the memory cell outputting a potential HIGH to the data line D, and it is supposed to be "0" with the memory cell outputting a potential LOW to the data line D.

When the NMOS element 17 connected to a column data line $\overline{Di}$ is made conductive to set the column data line Di in LOW while the NMOS element 17 connected to a column data line $\overline{Di}$ is made non-conductive to set the column data line $\overline{Di}$ in HIGH, "0" is written in one memory cell with its control line C being HIGH among the memory cells in the column connected to the column data lines Di and Di.

When the NMOS element 17 connected to a column data line $\overline{Di}$ is made non-conductive to set the column data line $\overline{Di}$ in HIGH while the NMOS element 17 connected to a column data line $\overline{Di}$ is made conductive to set the column data line $\overline{Di}$ in LOW, "1" is written in one memory cell with its control line C being HIGH among the memory cells in the column connected to the column data lines Di and Di.

Even if the control line C is HIGH, a value in one memory cell does not change if there is no potential difference between the two data lines D and $\overline{D}$ of the memory cell. Therefore, if the NMOS element 17 connected to the column data lines Di and $\overline{Di}$ are both made non-conductive to keep the two data lines of the memory cell HIGH, a hold signal is outputted.

A table of Fig. 11 shows relations of hit signals for indicating accessed elements and outputs of the input control circuit 15. According to this table, values in memory cells of an enabled row are updated.

The input control circuit 15 may comprise, instead of the NMOS elements, P-channel MOS transistors. The PMOS transistors are connected between a power source and the column data lines. Therefore, "1" and "0" are written in a manner opposite to the case of NMOS elements.

The output control circuit 16 is a decoder which receives values in memory cells of an enabled row of the memory cell array 14 to determine an LRU element in a corresponding set of the cache memory, and sends an element selection signal to the selectors 7. Fig. 12 shows relations of values in respective memory cells and LRU elements determined according to the values. This kind of output control circuit 16 may easily be constituted by a logical circuit such as a PLA (Programmable Logic Array) circuit and a random logic circuit.

According to the LRU circuit of the present invention with the above-mentioned arrangement, when the cache memory is hit, values in memory cells in a row of the memory cell array corresponding to the accessed set of the cache memory are updated by the input control circuit 15 according to the LRU algorithm. If a cache miss occurs, values in memory cells in a row of the memory cell array corresponding to the accessed set of the cache memory are sent to the output control circuit 16 to determine an LRU element whose contents are replaced with the contents red out of the main storage.

In summary, the LRU circuit of the present invention uses a memory cell array such as the one shown in Fig. 6 which can be integrated densely, together with a simple input control circuit such as the one shown in Fig. 10 to update values in cells of the memory cell array according to an LRU algorithm with no reading operation. Therefore, a high-speed operation and dense integration are realized.

Although the LRU circuit of the present invention has been applied for the cache memory in this specification, the LRU circuit of the present invention is applicable not only for the cache memory but also for TLB, etc.

## Claims

1. An LRU circuit for selecting a unit storage region which is storing a piece of information which is not accessed for the longest timer period, among storage regions in an intermediate memory disposed between a main storage portion and a processing portion for processing information stored in the main storage portion, the LRU circuit comprising:

a memory cell array (14) including regularly arranged LRU cells each having inverter circuits of which inputs and outputs are connected to each other to hold a piece of LRU information;

input control means (15) for giving pieces of updating information related to a position of the selected unit storage region to the LRU cells to update the pieces of LRU information stored in the LRU cells within a unit access cycle of the intermediate memory; and

output control means (16) for informing the intermediate memory of the unit storage region having the information not accessed for the longest time period, according to the pieces of LRU information stored in the LRU cells.

2. The LRU circuit according to claim 1, wherein each of the memory cells comprises a control line (10) and two data lines (11, 12) used for reading and writing operations, and two inverter circuits and two MOS elements, an input terminal and an output terminal of one of the inverter circuits being connected to an output terminal and an input terminal of the other inverter circuit, respectively, the terminals of the inverter circuits being connected to the data lines (11, 12) via the MOS elements, and gates of the MOS elements being connected to the control line (10).

3. The LRU circuit according to claim 2, wherein each of the memory cells are set in one of two statuses if there is a potential difference between the data lines (11, 12) while holding a present status as it is if there is no potential difference between the data lines (11, 12), the number of columns of said memory cell array (14) corresponds to the number of binary LRU data necessary for executing an LRU algorithm on the elements included in one of the sets while the number of rows of said memory cell array (14) corresponding to the number of the sets, the memory cells in each row of said memory cell array (14) are enabled by a signal sent from one corresponding set among the sets to read data out of or to write data into the memory cells, the data lines (11, 12) of the memory cells in the same column of said memory cell array (14) are connected to each other in the direction of the column.

4. The LRU circuit according to claim 3, wherein said input control means (15) comprises NMOS elements (17) having source terminals connected to the data lines (D1 to D6, $\overline{D1}$ to $\overline{D6}$) of the columns of said cell array (14), drain terminals grounded, and gate terminals connected with hit signals which indicate one used element among the elements of one of the sets, said input control means (15) setting the memory cells of one row of said memory cell array (14) corresponding to the one set in required statuses respectively or letting the meory cells hold the present statuses as they are, according to the LRU algorithm and the hit signals.

5. The LRU circuit according to claim 3, wherein said input control means (15) comprises PMOS elements having drain terminals connected to the data lines (D1 to D6; $\overline{D1}$ to $\overline{D6}$) of the columns of said memory cell array (14), source terminals connected to a power source, and gate terminals grounded, the gate terminals of the PMOS elements being connected with the hit signals which indicate one used element among the elements of one of the sets, said input control means setting the memory cells of one row of said memory cell array (14) corresponding to the one set in required statuses respectively or letting the meomry cells hold the present statuses as they are, according to the LRU algorithm and the hit signals.

6. An LRU circuit for determining an LRU element in a single set or one of a plurality of sets each including a plurality of elements, comprising:
a memory cell array (14) composed of a plurality of memory cells each provided with a control line (10) for enabling reading and writing operations of the memory cell and two data lines (11, 12) used for the reading and writing operations, each of the memory cells being set in one of two statuses if there is a potential difference between the data lines (11, 12) while holding a present status as it is if there is no potential difference between the data lines (11, 12), the number of columns of said memory cell array (14) corresponding to the number of binary LRU data necessary for executing an LRU algorithm on the elements included in one of the sets while the number of rows of said memory cell array (14) corresponding to the number of the sets, the memory cells in each row of said memory cell array (14) being enabled by a signal sent from one corresponding set among the sets to read data out of or to write data into the memory cells, the data lines (11, 12) of the memory cells in the same column of said memory cell array (14) being connected to each other in the direction of the column;
an input control circuit (15) for updating the memory cells through the data lines (11, 12) of the columns according to the LRU algorithm and according to hit signals which indicate one used element among the elements of one of the sets; and
an output control circuit (16) for determining an LRU element by decoding values of the memory cells in one presently active row of said memory cell array (14).

7. The LRU circuit according to claim 6, wherein each of the memory cells comprises two inverter circuits and two MOS elements, an input terminal and an output terminal of one of the inverter circuits being connected to an output terminal and an input terminal of the other inverter circuit, respectively, the terminals of the inverter circuits being connected to the data lines (11, 12) via the MOS elements, and gates of the MOS elements being connected to the control line (10).

8. The LRU circuit according to claim 6, wherein said input control circuit (15) comprises NMOS elements (17) having source terminals connected to the data lines (D1 to D6; $\overline{D1}$ to $\overline{D6}$) of the columns of said memory cell array (14), drain terminals grounded, and gate terminals connected with the hit signals which indicate one used element among the elements of one of the sets, said input control circuit (15) setting the memory cells of one row of said memory cell array (14) corresponding to the one set in required statuses respectively or letting the memory cells hold the present statuses as they are, according to the LRU algorithm and the hit signals.

9. The LRU circuit according to claim 6, wherein said input control circuit (15) comprises PMOS elements having drain terminals connected to the data lines (D1 to D6; $\overline{D1}$ to $\overline{D6}$) of the columns of said memory cell array (14) source terminals connected to a power source, and gate terminals grounded, the gate terminals of the PMOS elements being connected with the hit signals which indicate one used element among the elements of one of the sets, said input control circuit (15) setting the memory cells of one row of said memory cell array (14) corresponding to the one set in required statuses respectively or letting the memory cells hold the present statuses as they are, according to the LRU algorithm and the hit signals.

# F I G. 1

(A) ACCESSED BLOCK: b

(B) ACCESSED BLOCK: a

(C) ACCESSED BLOCK: c

(D) ACCESSED BLOCK: d

(E) ACCESSED BLOCK: a

(F) ACCESSED BLOCK: b

(G) ACCESSED BLOCK: d

(H) ACCESSED BLOCK: c

(I)

# FIG.2

UPPER ADDRESS

DATA

ELEMENT SELECTION
SIGNAL (ao,bo,co,do)

SELECTOR 6

6 SELECTOR

7 7

1 a | b | c | d

2 a | b | c | d

LOWER ADDRESS → DECODER

ADDRESS ARRAY

DATA ARRAY

3

UPPER ADDRESS →

HIT SIGNAL (ai,bi,ci,di)

4

5 SELECTOR

DATA

EP 0 330 213 A2

# FIG.3

EP 0 330 213 A2

# F I G.4

|   | a | b | c | d |
|---|---|---|---|---|
| a |   |   |   |   |
| b | 1 |   |   |   |
| c | 2 | 4 |   |   |
| d | 3 | 5 | 6 |   |

# F I G.6

# FIG.5

UPPER ADDRESS      DATA      ELEMENT SELECTION SIGNAL (ao,bo,co,do)

SELECTOR 7

SELECTOR

1

2

| a | b | c | d |

| a | b | c | d |

DECODER 3

ADDRESS·ARRAY

DATA·ARRAY

MEMORY·CELL·ARRAY

CONTROL CIRCUIT 9

LOWER ADDRESS

UPPER ADDRESS

4

HIT SIGNAL (ai,bi,ci,di)

5 SELECTOR

DATA

8

EP 0 330 213 A2

# FIG.7

UPPER ADDRESS

DATA ELEMENT SELECTION SIGNAL

```
         ┌──────────────┐ 7      7 ┌──────────────┐        ┌──────────────┐
         │   SELECTOR    │          │   SELECTOR    │        │   OUTPUT      │
         └──────────────┘          └──────────────┘        │   CONTROL     │
                                                            │   CIRCUIT     │
  1 ┌─────────────────┐    2 ┌─────────────────┐    17      └──────────────┘ 16
    │ a │ b │ c │ d │      │ a │ b │ c │ d │
    │                 │      │                 │           ┌─────────────────┐
    │                 │      │                 │           │                 │
    │  ADDRESS·ARRAY  │      │   DATA·ARRAY    │           │    MEMORY·      │
    │                 │      │                 │           │  CELL·ARRAY     │ 13
    │                 │      │                 │           │                 │
    │                 │      │                 │           │                 │ 14
    │                 │      │                 │           │                 │
    └─────────────────┘      └─────────────────┘           └─────────────────┘
```

LOWER ADDRESS → DECODER

3

UPPER ADDRESS

```
      ┌───────────────────┐    5  ┌──────────────┐      ┌──────────────┐
      │                   │       │   SELECTOR    │      │   INPUT       │
      └───────────────────┘       └──────────────┘      │   CONTROL     │
   4                                                      │   CIRCUIT     │
         HIT SIGNAL                                       └──────────────┘
                                      DATA
```

EXTERNAL CONTROL CIRCUIT

15

EP 0 330 213 A2

# FIG.8(A)

| | a | b | c | d |
|---|---|---|---|---|
| a | | O | O | l |
| b | l (1) | | O | l |
| c | l (2) | l (4) | | l |
| d | O (3) | O (5) | O (6) | |

# FIG.8(B)

| | a | b | c | d |
|---|---|---|---|---|
| a | | O | O | l |
| b | l | | l | l |
| c | l | O | | l |
| d | O | O | O | |

# FIG.9

SIGNAL FOR UPDATING LRU INFORMATION { SIGNAL FOR WRITING "l", SIGNAL FOR WRITING "O", HOLD SIGNAL

INPUT CONTROL CIRCUIT    l5

HIT SIGNAL     EXTERNAL CONTROL SIGNAL

# F I G. 10

| k l | k 2 | k 3 | k 4 | k 5 | k 6 |
|-----|-----|-----|-----|-----|-----|
| j l | j 2 | j 3 | j 4 | j 5 | j 6 |
| i l | i 2 | i 3 | i 4 | i 5 | i 6 |

## F I G. 11

| HIT SIGNAL | | | | DATA LINES | | | | | | | | | | | |
|---|---|---|---|---|---|---|---|---|---|---|---|---|---|---|---|
| $a_i$ | $b_i$ | $c_i$ | $d_i$ | $D_1$ | $\overline{D_1}$ | $D_2$ | $\overline{D_2}$ | $D_3$ | $\overline{D_3}$ | $D_4$ | $\overline{D_4}$ | $D_5$ | $\overline{D_5}$ | $D_6$ | $\overline{D_6}$ |
| 1 | 0 | 0 | 0 | 0 | 1 | 0 | 1 | 0 | 1 | 1 | 1 | 1 | 1 | 1 | 1 |
| 0 | 1 | 0 | 0 | 1 | 0 | 1 | 1 | 1 | 1 | 0 | 1 | 0 | 1 | 1 | 1 |
| 0 | 0 | 1 | 0 | 1 | 1 | 1 | 0 | 1 | 1 | 1 | 0 | 1 | 1 | 0 | 1 |
| 0 | 0 | 0 | 1 | 1 | 1 | 1 | 1 | 1 | 0 | 1 | 1 | 1 | 0 | 1 | 0 |

## F I G. 12

| MEMORY CELLS IN EACH ROW | | | | | | ELEMENT SELECTION SIGNAL | | | |
|---|---|---|---|---|---|---|---|---|---|
| 1 | 2 | 3 | 4 | 5 | 6 | $a_o$ | $b_o$ | $c_o$ | $d_o$ |
| 1 | 1 | 1 | X | X | X | 1 | 0 | 0 | 0 |
| 0 | X | X | 1 | 1 | X | 0 | 1 | 0 | 0 |
| X | 0 | X | 0 | X | 1 | 0 | 0 | 1 | 0 |
| X | X | 0 | X | 0 | 0 | 0 | 0 | 0 | 1 |

(X:don't care)